# EUROPEAN PATENT APPLICATION

(11) **EP 4 644 064 A1**
(43) Date of publication of application: **05.11.2025**
(21) Application number: 23912307.8
(22) Date of filing: 28.12.2023
(51) Int. Cl.: B25J 15/06

(54) **PROCESSING DEVICE, ROBOT CONTROL SYSTEM, PROGRAM, AND TERMINAL DEVICE**

(30) Priority: 28.12.2022 JP 2022212429
(71) Applicant: Kyocera Corporation, Kyoto-shi, Kyoto 612-8501 (JP)
(72) Inventor: SHOJI, Haruki, Kyoto-shi, Kyoto 612-8501 (JP)
(74) Representative: TBK
(86) International application number: PCT/JP2023/047212
(87) International publication number: WO 2024/143530

(57) **Abstract**

A processing device controls a robot including a suction portion being elastic to suck and hold a target object. The processing device includes a controller that controls the robot. The controller causes the suction portion to come in contact with the target object in a direction different from a normal direction to a suction target surface of the target object and causes the suction portion to suck the target object.

## Description

### TECHNICAL FIELD

The present disclosure relates to a technique for sucking and holding a target object with a robot.

### BACKGROUND OF INVENTION

Patent Literature 1 describes a technique for holding a target object with a robot.

### CITATION LIST

### PATENT LITERATURE

Patent Literature 1: Japanese Unexamined Patent Application Publication No. 2002-331480

### SUMMARY

One or more aspects of the present disclosure are directed to a processing device, a robot control system, a program, and a terminal. In one embodiment, a processing device is a device for controlling a robot including a suction portion being elastic to suck and hold a target object. The processing device includes a controller that controls the robot. The controller causes the suction portion to come in contact with the target object in a direction different from a normal direction to a suction target surface of the target object and causes the suction portion to suck the target object.

In one embodiment, a robot control system includes the above processing device and a robot connected to the processing device.

In one embodiment, a program is a program for causing a computer to function as the above processing device.

In one embodiment, a processing device is a device for controlling a robot including a suction portion to suck and hold a target object in a movable manner. The processing device includes a controller that controls the robot. The controller controls the robot to cause the suction portion to come in contact with a suction target surface of the target object with a first end of the suction portion contracted more than a second end opposite the first end.

In one embodiment, a terminal includes a display and a controller. The controller obtains an approaching direction for a robot that sucks and holds a target object to approach the target object in a direction different from a normal direction to a suction target surface of the target object and causes the display to display the approaching direction in a perceivable manner.

### BRIEF DESCRIPTION OF THE DRAWINGS

FIG. 1 is a block diagram of an example processing device.
FIG. 2 is a schematic diagram of a robot and its surroundings in an example.
FIG. 3 is a schematic diagram of a robot approaching in a set approaching direction in an example.
FIG. 4 is a flowchart of an example operation performed by a controller.
FIG. 5 is a schematic diagram of a reference direction and a normal direction in an example.
FIG. 6 is a schematic diagram describing an example method for setting a reference direction.
FIG. 7 is a schematic diagram of a direction based on an adjustment angle (first reduction direction) in an example.
FIG. 8 is a schematic diagram of the robot approaching in the direction based on the adjustment angle in an example.
FIG. 9 is a schematic diagram of the robot sucking an object in an example.
FIG. 10 is a flowchart of an example operation performed by the controller.
FIG. 11 is a schematic diagram of the robot approaching in the normal direction in an example.
FIG. 12 is a flowchart of an example operation performed by the controller.
FIG. 13 is a flowchart of an example operation performed by the controller.
FIG. 14 is a schematic diagram of a direction based on an upper limit value (second reduction direction) in an example.
FIG. 15 is a schematic diagram of the robot approaching in the direction based on the upper limit value in an example.
FIG. 16 is a flowchart of an example operation performed by the controller.
FIG. 17 is a flowchart of an example operation performed by the controller.
FIG. 18 is a schematic diagram of the direction based on the adjustment angle (first reduction direction) and the direction based on the upper limit value (second reduction direction) in an example.
FIG. 19 is an example information table.
FIG. 20 is a block diagram of a robot control system, illustrating an example structure.
FIG. 21 is a schematic diagram of a terminal, illustrating an example display.
FIG. 22 is a schematic diagram of the terminal, illustrating an example display.

### DESCRIPTION OF EMBODIMENTS

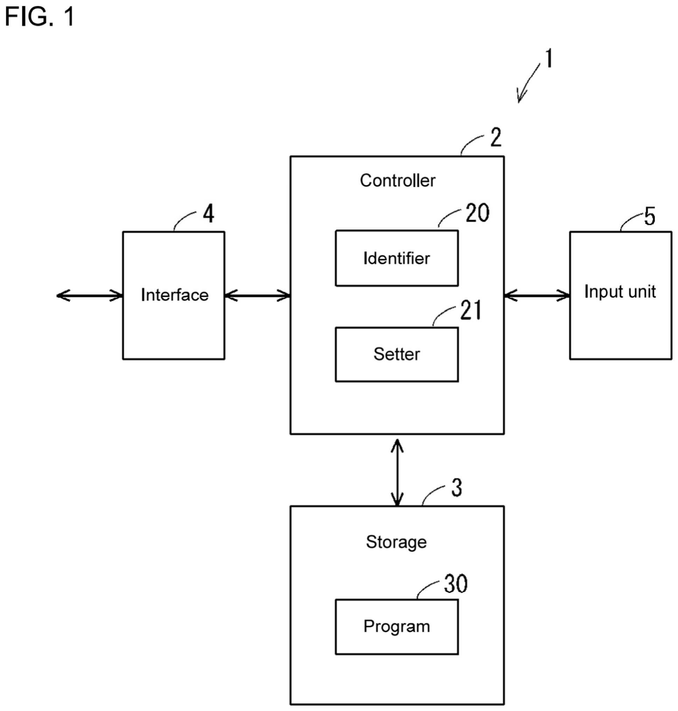

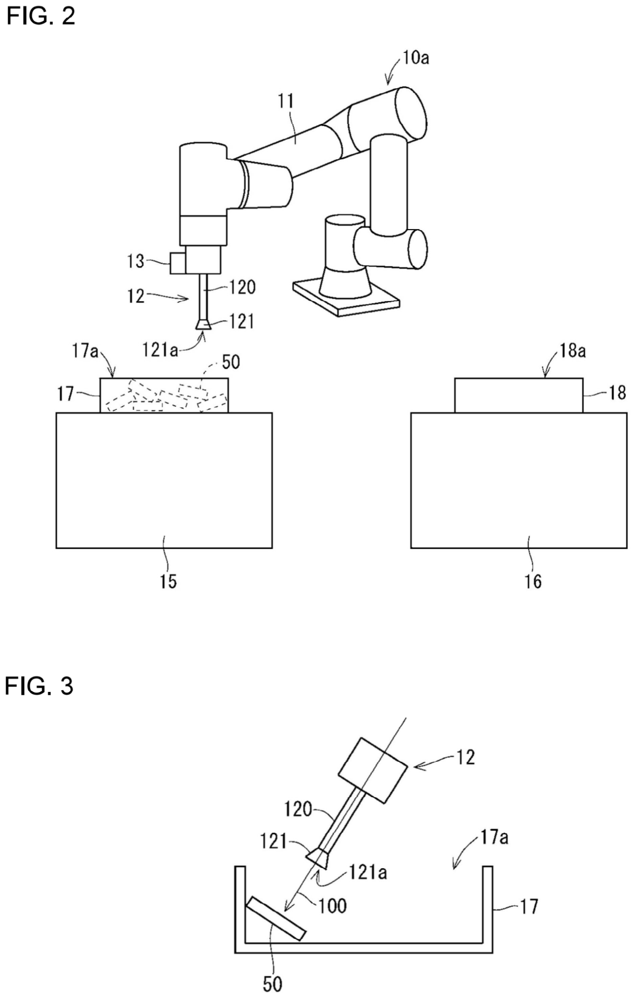

FIG. 1 is a block diagram of a processing device 1, illustrating an example structure. The processing device 1 can set an approaching direction in which a robot 10 for sucking and holding a target object 50 approaches the target object 50. FIG. 2 is a schematic diagram of the robot 10 and its surroundings in an example.

The robot 10 transfers, for example, the target object 50 held by the robot 10 (also simply referred to as an object 50) from a source area to a destination area. The robot 10 approaches the target object 50 in the source area in the approaching direction set by the processing device 1 and sucks and holds the target object 50. The robot 10 then transfers the holding object 50 from the source area to the destination area. For example, the robot 10 changes its posture to transfer the holding object 50 from the source area to the destination area. The object 50 is also referred to as, for example, a workpiece.

The source area and the destination area are, for example, containers. Multiple objects 50 are in a container 17 as the source area (also referred to as a source container 17). The multiple objects 50 are, for example, randomly placed in the source container 17. For example, the robot 10 sucks and holds the objects 50 in the source container 17 one by one and transfers the objects 50 to a container 18 as the destination area (also referred to as a destination container 18). For example, the source container 17 is placed on a worktable 15, and the destination container 18 is placed on a worktable 16. The worktable 15 may be a starting worktable 15. The worktable 16 may be a destination worktable 16. The robot 10 may transfer each of the objects 50 on the starting worktable 15 to the destination worktable 16.

The robot 10 includes, for example, an arm 11 and an end effector 12 connected to the arm 11. The arm 11 includes multiple joints. The position of the arm 11, or in other words, the posture of the arm 11 is determined by the rotation amount of each of the multiple joints.

The end effector 12 can suck and hold the object 50. The end effector 12 includes, for example, an elongated suction nozzle 120 and a suction portion 121 attached to the tip of the suction nozzle 120. The end effector 12 may also be referred to as a suction holder that sucks and holds the object 50.

The suction portion 121 is, for example, an elastic member made of synthetic rubber, and is also referred to as, for example, a suction pad. The suction portion 121 is hollow and includes a suction opening 121a. When the end effector 12 sucks and holds the object 50, an edge of the suction opening 121a of the suction portion 121 comes in contact with the object 50, covering the suction opening 121a. The robot 10 then reduces the pressure inside the suction portion 121 through the suction nozzle 120 to cause the opening edge of the suction portion 121 to be in tight contact with the object 50. This allows the suction portion 121 to suck the object 50. The suction portion 121 sucking the object 50 elastically deforms under the reduced pressure inside the suction portion 121. The suction portion 121 may be a flat portion or may be a bellows portion. The suction portion 121 is also referred to as a vacuum pad.

The robot 10 moves the arm 11 to approach the object 50 in the source container 17 in the approaching direction (set approaching direction) set by the processing device 1 and sucks and holds the object 50 with the end effector 12. In other words, the robot 10 changes the posture of the arm 11 to move the end effector 12 in the set approaching direction and approach the object 50. The robot 10 then sucks and holds the object 50 with the end effector 12. The robot 10 moves the arm 11 with the end effector 12 holding the object 50 to transfer the object 50 to the destination container 18. For example, the robot 10 transfers the object 50 to the destination container 18 by changing the posture of the arm 11. When the end effector 12 releases the object 50 (or stops sucking the object 50), the object 50 is placed in the destination container 18. The robot 10 repeats this operation. Note that the operation performed by the robot 10 is not limited to the above.

The robot 10 includes, for example, a camera 13. The camera 13 is, for example, a three-dimensional camera. As illustrated in FIG. 2, the camera 13 is attached to, for example, the end effector 12. Thus, the camera 13 has an imaging range that changes with the posture of the end effector 12. The posture of the end effector 12 changes with the posture of the arm 11. The imaging range of the camera 13 thus changes with the posture of the arm 11.

When the end effector 12 holds one of the objects 50 in the container 17, the camera 13 captures an image of the container 17 from a position adjacent to an opening 17a of the container 17 (in other words, from above the container 17). In this case, the multiple objects 50 in the container 17 are in the imaging range of the camera 13. When the end effector 12 releases the object 50 to place the object 50 in the container 18, the camera 13 captures an image of the container 18 from a position adjacent to an opening 18a of the container 18 (in other words, from above the container 18).

The camera 13 captures an image within the imaging range and generates a two-dimensional color image and a range image. When the end effector 12 holds one of the objects 50 in the container 17, the container 17 and the multiple objects 50 in the container 17 are captured in the color image. The camera 13 generates camera images including the color image and the range image. The range image may be obtained with, for example, a stereo method, a time-of-flight (ToF) method, or any other method.

The processing device 1 is, for example, a computer. The processing device 1 can control the robot 10 in addition to setting the approaching direction in which the suction portion 121 comes in contact with the object 50. The processing device 1 also functions as a robot control device that controls the robot 10. For example, the processing device 1 can control the robot 10 to approach the object 50 in the set approaching direction. Note that a robot control device that controls the robot 10 may be used separately from the processing device 1. In this case, the processing device 1 provides the set approaching direction to the robot control device. The robot control device controls the robot 10 to approach the object 50 in the provided set approaching direction.

As illustrated in FIG. 1, the processing device 1 includes, for example, a controller 2, a storage 3, an interface 4, and an input unit 5. The processing device 1 may be, for example, a processing circuit.

The interface 4 can communicate with the robot 10. The controller 2 can control the robot 10 through the interface 4. The controller 2 can obtain the camera images generated by the camera 13 from the robot 10 through the interface 4. The interface 4 may be, for example, an interface circuit, a communicator, or a communication circuit. The interface 4 may perform wired or wireless communication with the robot 10. Note that the processing device 1 may not include the interface 4 when a robot control device for controlling the robot 10 is used separately from the processing device 1. The camera images generated by the camera 13 are hereafter simply referred to as camera images.

The controller 2 can control other components of the processing device 1 to centrally manage the operation of the processing device 1. The controller 2 may be, for example, a control circuit. The controller 2 includes at least one processor to provide control and processing capabilities for implementing various functions, as described in more detail below.

In various embodiments, at least one processor may be a single integrated circuit (IC), or multiple ICs, multiple discrete circuits, or both these circuits connected to one another for mutual communication. The processor may be implemented using various known techniques.

In one embodiment, for example, the processor includes one or more circuits or units configured to implement instructions stored in an associated memory to perform one or more data computation procedures or processes. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors, programmable logic devices, field programmable gate arrays, combinations of any of these devices or configurations, or combinations of other known devices and configurations. The processor may implement the functions described below.

The controller 2 may include, for example, a central processing unit (CPU) as the processor. The storage 3 may include a non-transitory recording medium readable by the CPU in the controller 2, such as a read-only memory (ROM) and a random-access memory (RAM). The storage 3 stores, for example, a program 30 for controlling the processing device 1. Various functions of the controller 2 are implemented by, for example, the CPU in the controller 2 executing the program 30 in the storage 3.

Note that the structure of the controller 2 is not limited to the above example. For example, the controller 2 may include multiple CPUs. The controller 2 may also include at least one digital signal processor (DSP). The functions of the controller 2 may be implemented entirely or partially by a hardware circuit, without using software to implement the functions. The storage 3 may include a non-transitory computer-readable recording medium other than the ROM and the RAM. The storage 3 may include, for example, a small hard disk drive and a solid-state drive (SSD).

The input unit 5 can receive various inputs from a user. The input unit 5 may include, for example, a mouse and a keyboard. The input unit 5 may include a touch sensor that receives touch operations performed by the user. The processing device 1 may include a display such as a liquid crystal display. In this case, the display and the touch sensor may together serve as a touchscreen display that performs display and detects a touch. The input unit 5 may include a microphone that receives a voice input from the user. The controller 2 identifies the user input received by the input unit 5 based on an output signal from the input unit 5.

The controller 2 can perform an approaching direction setting process to set the approaching direction. The controller 2 includes, for example, an identifier 20 and a setter 21. For example, the CPU in the controller 2 executes the program 30 in the storage 3 to implement, as functional blocks, the identifier 20 and the setter 21 in the controller 2. Note that the functions of the identifier 20 may be implemented entirely or partially by a hardware circuit, without using software to implement the functions. The setter 21 also has the same or a similar structure.

The identifier 20 identifies a normal direction to a suction target surface of the object 50. The setter 21 sets the approaching direction based on the normal direction identified by the identifier 20 and a reference direction for the robot 10 to approach the object 50. Example operations performed by the identifier 20 and the setter 21 will be described in detail later.

### Example Method for Robot to Approach Object

FIG. 3 is a schematic diagram of the robot 10 approaching the object 50 in the container 17 in an example. FIG. 3 illustrates the cross-sectional structure of the container 17 to illustrate the inside of the container 17. The container 17 in other figures (described later) is also illustrated in the same or a similar manner.

When the robot 10 holds one of the objects 50 in the container 17, the robot 10 first moves the arm 11 to place the suction portion 121 in the end effector 12 adjacent to the object 50. The robot 10 then approaches the object 50 in a set approaching direction 100 set by the processing device 1 to suck and hold the object 50 with the end effector 12.

When the robot 10 approaches the object 50, the robot 10 moves, for example, the end effector 12 in a direction aligned with a longitudinal direction of the suction nozzle 120 toward the object 50.

A plane including the suction opening 121a of the suction portion 121 is referred to as a suction opening plane. The suction opening plane is perpendicular to the longitudinal direction of the suction nozzle 120. In this case, when the robot 10 approaches the object 50, the robot 10 moves the end effector 12 toward the object 50 in a direction perpendicular to the suction opening plane to place the end effector 12 in contact with the suction target surface.

When the robot 10 approaches the object 50 in the set approaching direction 100, the robot 10 moves the end effector 12 toward the object 50 in the approaching direction 100 to place the end effector 12 in contact with the object 50. To place the end effector 12 in contact with the object 50, for example, the robot 10 causes the suction opening 121a of the suction portion 121 to face the object 50 and moves the end effector 12 toward the object 50 in the approaching direction 100 with the approaching direction 100 aligned with the longitudinal direction of the suction nozzle 120 as illustrated in FIG. 3. After approaching the object 50 and placing the suction portion 121 in tight contact with the object 50, the robot 10 reduces the pressure in the suction portion 121 to suck the object 50 with the suction portion 121. In this example, the longitudinal direction of the suction nozzle 120 is perpendicular to the suction opening plane. Thus, to approach the object 50, the robot 10 moves the end effector 12 toward the object 50 and places the end effector 12 in contact with the object 50 while causing the suction opening plane to be perpendicular to the approaching direction 100. Example Approaching Direction Setting Process

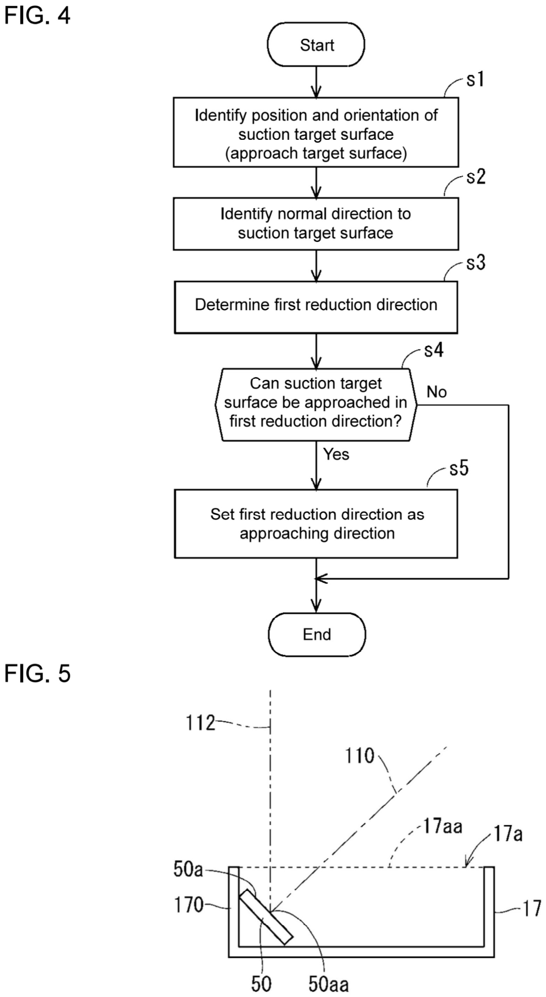

FIG. 4 is a flowchart of an example approaching direction setting process performed by the controller 2. Before performing the approaching direction setting process, the controller 2 determines an object 50 (also referred to as an approach object 50) that is to be approached among the multiple objects 50 in the container 17. The controller 2 determines the approach object 50 based on, for example, the camera images. When the controller 2 determines the approach object 50, the end effector 12 is located above the container 17 to allow the camera 13 to capture an image of the container 17 and the multiple objects 50 in the container 17.

In this example, a specific area on a surface of the object 50 is a suction target surface to be sucked and held by the robot 10. For example, the suction target surface is an area on a surface of the object 50 that is easily sucked by the suction portion 121. The suction target surface may also be an area on a surface of the object 50 that is less likely to be damaged when sucked by the suction portion 121. When the robot 10 sucks the object 50, the robot 10 approaches the suction target surface of the object 50 and sucks the suction target surface. The suction target surface may be flat or curved. The suction target surface may be each of multiple surfaces being parts of multiple surfaces of the object 50.

The controller 2 identifies, among the multiple objects 50 in the container 17, for example, an object 50 with a largest visible area on the suction target surface based on the camera images. The controller 2 then determines the identified object 50 as the approach object 50. The visible area on the suction target surface is an area that is visible when the suction target surface is viewed from above the container 17. The visible area on the suction target surface is also an area on the suction target surface included in an image captured by the camera 13. Note that the method for determining the approach object 50 is not limited to this example.

After determining the approach object 50, the controller 2 performs the approaching direction setting process shown in FIG. 4 for the determined approach object 50. After setting the approaching direction through the approaching direction setting process, the controller 2 controls the robot 10 to move to a position to start approaching the approach object 50 (approach start position) in the set approaching direction. The approach start position is set to have no interference between the robot 10 and the container 17. The controller 2 then controls the robot 10 at the approach start position to approach the approach object 50 in the set approaching direction and suck the approach object 50.

In the approaching direction setting process, the identifier 20 in the controller 2 first identifies the position and the orientation of the suction target surface (also referred to as an approach target surface) of the approach object 50 based on the camera images in step s1. In other words, the approach object 50 is identified. The orientation of the suction target surface is also the direction in which the suction target surface faces. The identifier 20 generates, for example, point cloud data indicating the approach target surface based on the range image included in the camera images. The controller 2 then identifies the position and the orientation of the approach target surface based on the generated point cloud data.

After step s1, the identifier 20 identifies the normal direction to the approach target surface based on the identified position and orientation of the approach target surface. The identifier 20 identifies, for example, the normal direction to the approach target surface at a representative point. The representative point may be, for example, the center point on the approach target surface.

FIG. 5 is a schematic diagram of a normal direction 110 to an approach target surface 50a (also referred to as a suction target surface 50a) of the approach object 50 identified by the identifier 20 in an example. As in the example in FIG. 5, when the approach target surface 50a is flat, the identifier 20 identifies the normal direction 110 perpendicular to the approach target surface 50a at a representative point 50aa on the approach target surface 50a. When the approach target surface 50a is curved, the normal direction 110 including the representative point 50aa and being perpendicular to the tangent plane to the curved surface at the representative point 50aa is identified.

After step s2, the setter 21 sets the approaching direction 100 based on the normal direction 110 identified in step s2 and a reference direction 112 for the robot 10 to approach the approach object 50.

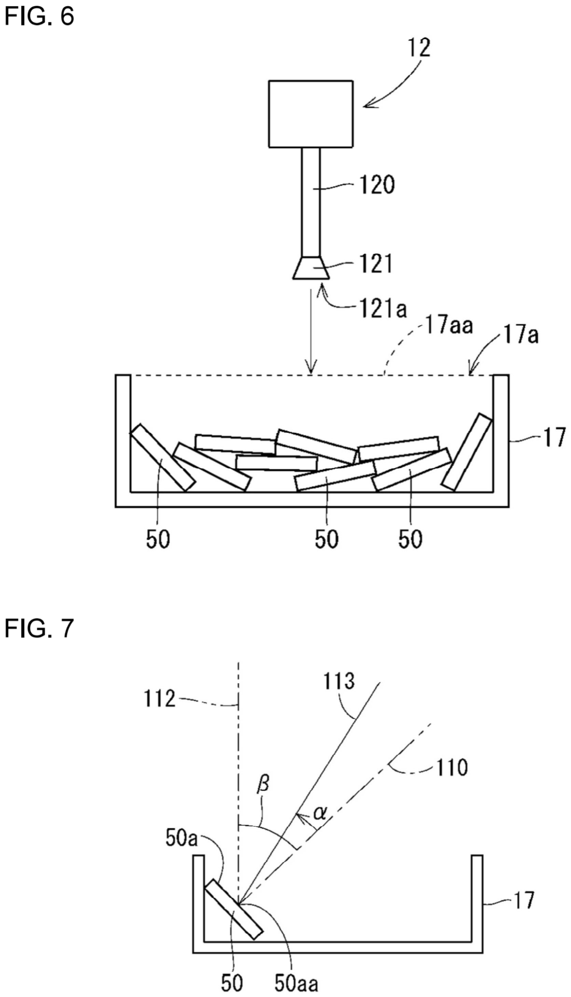

FIG. 6 is a schematic diagram describing an example method for setting the reference direction 112. The reference direction 112 is set as, for example, the direction in which the robot 10 can easily approach the approach object 50. In this example, the objects 50 are in the container 17 with an open top. Thus, as illustrated in FIG. 6, the robot 10 approaching the objects 50 from directly above the container 17 can easily approach each of the objects 50 in the container 17. More specifically, the robot 10 approaching the objects 50 from directly above the container 17 can easily approach any one of the multiple objects 50 in the container 17. In other words, the robot 10 approaching inside the container 17 from directly above the container 17 allows the suction portion 121 to easily reach any position in the container 17.

Thus, the reference direction 112 is set based on, for example, the orientation of the opening 17a of the container 17. For example, the reference direction 112 may be set to a direction perpendicular to a plane 17aa including the opening 17a of the container 17 (also referred to as an opening plane 17aa) as illustrated in FIG. 5. For example, the reference direction 112 may be set to a direction perpendicular to the opening plane 17aa at the representative point 50aa on the approach target surface 50a. In this example, the container 17 has a wall 170 with a height direction perpendicular to the opening plane 17aa. Thus, the reference direction 112 is set parallel to the height direction of the wall 170. Note that the reference direction 112 may slightly tilt with respect to the direction perpendicular to the opening plane 17aa. In this case, the reference direction 112 may have a tilt angle of, for example, larger than 0 degrees and smaller than or equal to 10 degrees with respect to the direction perpendicular to the opening plane 17aa. The reference direction 112 may also be based on, for example, the positional relationship between the robot 10 and the container 17, and may be set to a direction with the highest degree of freedom for each joint of the robot 10 that approaches the container 17. The reference direction 112 may also be indicated by, for example, a line segment connecting a position at which the inside of the container 17 is most visible from the robot 10 and the representative point on the approach object 50. The position at which the inside of the container 17 is most visible from the robot 10 may be, for example, above the center of the opening plane 17aa. Note that the direction perpendicular to the opening plane of the container 17 may be simply set as the reference direction 112, although the reference direction 112 is set as the direction for easy approach in the above example. The reference direction 112 may be changed for each of multiple approach objects 50.

The reference direction 112 may be set by, for example, a user such as a robot user or a robot engineer. The reference direction 112 may be determined differently by each user, for example. The user inputs, for example, reference direction information indicating the reference direction 112 into the processing device 1 through the input unit 5. The storage 3 stores the reference direction information input into the processing device 1. The setter 21 sets the approaching direction 100 based on the reference direction 112 indicated by the reference direction information in the storage 3.

When the approaching direction 100 is set after step s2, the setter 21 first determines, in step s3, a direction 113 (also referred to as a first reduction direction 113) based on an adjustment angle α by which the direction 113 is shifted from the normal direction 110 toward the reference direction 112 as illustrated in FIG. 7. Note that the first reduction direction 113 is shifted from the normal direction 110 by the adjustment angle α toward the reference direction 112 in the present embodiment. The reference direction 112 may be used to set the approaching direction 100 as a reference for determining an adjustment direction. The adjustment angle α is set based on, for example, a success rate for sucking the suction target surface 50a with the suction portion 121 (also referred to as a suction success rate), as described later. Note that the adjustment angle α may be set to, for example, at least 5 degrees or more, at least 10 degrees or more, at least 15 degrees or more, or at least 20 degrees or more.

To determine the direction 113 based on the adjustment angle α (in other words, the first reduction direction 113), the setter 21 uses, for example, a specific plane including the normal direction 110 and the reference direction 112. The setter 21 then rotates the normal direction 110 by the adjustment angle α toward the reference direction 112 using one end of a line extending in the normal direction 110 adjacent to the representative point 50aa as the pivot of the rotation on the specific plane to obtain the first reduction direction 113. The angle of the normal direction 110 with respect to the reference direction 112, or the angle between the reference direction 112 and the normal direction 110, is a normal angle β. The first reduction direction 113 and the normal direction 110 form the angle α. The first reduction direction 113 and the reference direction 112 form an angle (β - α).

After step s3, the setter 21 determines, in step s4, whether the robot 10 can actually approach the approach target surface 50a in the first reduction direction 113. More specifically, the setter 21 determines whether the robot 10 can move from the approach start position toward the approach target surface 50a in the first reduction direction 113 and actually reach the approach target surface 50a.

When the robot 10 approaches the container 17 in a certain direction, the robot 10 may interfere with the container 17. In this case, the robot 10 cannot actually approach the approach target surface 50a in the certain direction. The robot 10 has singular points. The robot 10 with such a structure cannot freely set the position of the suction portion 121 in the end effector 12. Thus, the robot 10 may not be allowed to actually approach the approach target surface 50a in a certain direction.

The setter 21 identifies, for example, the position and the orientation of the container 17 based on the camera images. The setter 21 then determines, based on the identification results, whether the robot 10 interferes with the container 17 when the robot 10 approaches the approach target surface 50a in the first reduction direction 113. The controller 2 identifies positions of the suction portion 121 to allow the robot 10 to approach the approach target surface 50a in the first reduction direction 113. The controller 2 then determines, using an inverse kinematics equation, whether the suction portion 121 can actually be set at each of the identified positions. When determining that the suction portion 121 can be actually set at each of the identified positions and the robot 10 does not interfere with the container 17, the setter 21 determines that the robot 10 can actually approach the approach target surface 50a in the first reduction direction 113.

When determining that the robot 10 can approach the approach target surface 50a in the first reduction direction 113 in step s4, the setter 21 sets the first reduction direction 113 as the approaching direction 100 in step s5. This sets the approaching direction 100 toward the approach object 50, and the approaching direction setting process ends.

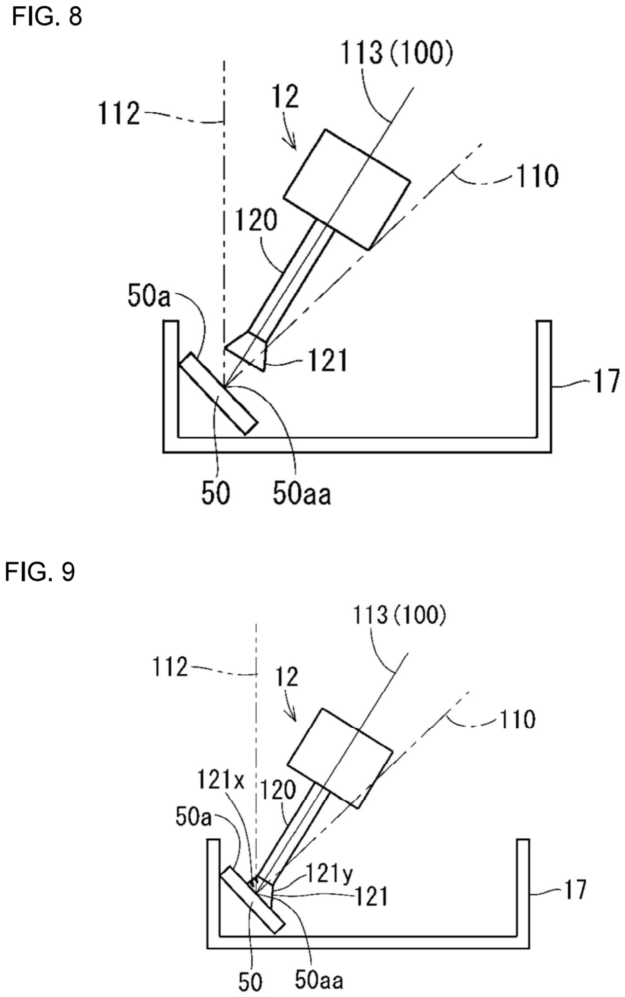

After the approaching direction 100 is set through the approaching direction setting process, the controller 2 controls the robot 10 to approach the approach target surface 50a in the set approaching direction 100 and suck the approach target surface 50a. FIG. 8 is a schematic diagram of the robot 10 approaching the approach target surface 50a in the first reduction direction 113 set as the approaching direction 100 in an example.

As in the example in FIG. 8, when the robot 10 approaches the approach target surface 50a in the first reduction direction 113 and sucks the object 50 with the suction portion 121, as illustrated in FIG. 9, the suction portion 121 in contact with the suction target surface 50a of the object 50 has a first end portion 121x contracted more than a second end portion 121y opposite the first end portion 121x. In the example in FIG. 9, when the suction portion 121 approaches the object 50, the suction portion 121 is in tight contact with the object 50 with its upper end (or the left end of the suction portion 121 in FIG. 9) contracted more than its lower end (or the right end of the suction portion 121 in FIG. 9). In other words, when the suction portion 121 has a conical frustum profile, the suction portion 121 may have its side surface in tight contact with the object 50 with the first end portion 121x, which is located at a smaller angle with respect to the approaching direction 100 than with respect to the normal direction 110, contracted more than the second end portion 121y opposite the first end portion 121x. The suction portion 121 moves toward the object 50 with the suction opening plane 121a not directly facing the suction target surface 50a of the object 50. In other words, the suction portion 121 moves toward the object 50 with the suction opening plane 121a obliquely facing the suction target surface 50a. The suction portion 121 in tight contact with the object 50 may change its shape under the gravity of the object 50 once the suction portion 121 sucks the object 50. In other words, the shape of the suction portion 121 may be different before and after the suction portion 121 lifts the object 50.

After the robot 10 sucks the object 50, the controller 2 controls the robot 10 to transfer the object 50 to the destination container 18 and place the object 50 in the destination container 18. After the robot 10 places the object 50 in the destination container 18, the controller 2 controls the robot 10 to move the end effector 12 to above the source container 17. After determining a next approach object 50, the controller 2 performs the approaching method setting process for the determined next approach object 50. The controller 2 thereafter operates in the same manner as or in a similar manner to the above. When determining the approach object 50 based on the camera images as illustrated in, for example, FIG. 6, the controller 2 controls the posture of the arm 11 to allow the suction opening plane of the suction portion 121 to be parallel to the opening plane 17aa of the container 17.

In response to determination in step s4 that the robot 10 cannot actually approach the approach target surface 50a in the first reduction direction 113 due to interference between the robot 10 and the container 17 or a singular point of the robot 10, the approaching direction setting process ends without setting the approaching direction 100 toward the approach object 50.

When the approach setting process ends without setting the approaching direction 100, the controller 2 determines a next approach object 50. The controller 2 then performs the approaching method setting process for the determined next approach object 50. The controller 2 thereafter operates in the same manner as or in a similar manner to the above.

Note that the rotated normal direction 110 may exceed the reference direction 112 when the normal direction 110 is rotated by the adjustment angle α toward the reference direction 112 on the specific plane using one end of the line extending in the normal direction 110 adjacent to the representative point 50aa as the pivot for rotation to determine the first reduction direction 113. In this case, the setter 21 may determine, in step s4, whether the robot 10 can approach the approach target surface 50a in the reference direction 112. When determining that the robot 10 can approach the approach target surface 50a in the reference direction 112, the setter 21 may set the reference direction 112 as the approaching direction 100 in step s5.

In this manner, a direction different from the normal direction 110 is the approaching direction 100 in one or more embodiments of the present disclosure. More specifically, for example, the approaching direction 100 is set based on the normal direction 110 and the reference direction 112. To increase the suction success rate, the robot 10 may approach the approach target surface 50a in the normal direction 110. However, the robot 10 may not actually be allowed to approach the approach target surface 50a in the normal direction 110 due to, for example, interference between the robot 10 and the container 17, as described above. When the robot 10 approaches the approach target surface 50a in a direction shifted from the normal direction 110, the suction portion 121 may suck the approach target surface 50a with the elasticity (or flexibility) of the suction portion 121. As in this example, the approaching direction 100 being set based on the normal direction 110 and the reference direction 112 for the robot 10 to approach the approach object 50 increases the suction success rate and the likelihood that the robot 10 can actually approach the object 50 in the set approaching direction 100. As in the example in FIG. 4, for example, the direction 113 based on the adjustment angle α is set as the approaching direction 100. The direction 113 is shifted from the normal direction 110 by the adjustment angle α toward the reference direction 112 for the robot 10 that approaches the approach object 50. This setting increases the suction success rate and the likelihood that the robot 10 can actually approach the object 50 in the set approaching direction 100. Thus, the robot 10 can easily suck and hold the object 50.

The adjustment angle α is set based on, for example, the suction success rate for the robot 10 that approaches in the first reduction direction 113 and sucks the approach target surface 50a (also referred to as a suction success rate in the first reduction direction). For the robot 10 that approaches in the normal direction 110 and sucks the approach target surface 50a, the suction success rate is referred to as a suction success rate in the normal direction. The value of the adjustment angle α is set to allow the suction success rate in the first reduction direction to be greater than or equal to a predetermined percent of the suction success rate in the normal direction. The predetermined percent may be less than 100% and may be, for example, 70%, or another percentage value. The adjustment angle α may be input by, for example, the user through the input unit 5.

To calculate the suction success rates in the first reduction direction and in the normal direction for setting the adjustment angle α, the robot 10 may be actually operated (in other words, an actual machine of the robot 10 may be used) or a physics engine simulator for robots may be used. When the physics engine simulator for robots is used, the physics engine simulator may receive information that affects the suction success rate in the first reduction direction. For example, suction portion information on the suction portion 121 and object information on the object 50 may be input into the physics engine simulator for robots. The suction portion information input into the physics engine simulator for robots includes, for example, at least one selected from the group consisting of the diameter of the suction opening 121a of the suction portion 121, the length of the suction portion 121, and the material of the suction portion 121. The object information input into the physics engine simulator for robots includes at least one selected from the group consisting of the mass of the object 50, information for identifying the surface treatment (e.g., anodizing, bead blasting, or grinding) performed on the object 50, and the positional information of the suction target surface 50a of the object 50.

### Another Example Approaching Direction Setting Process

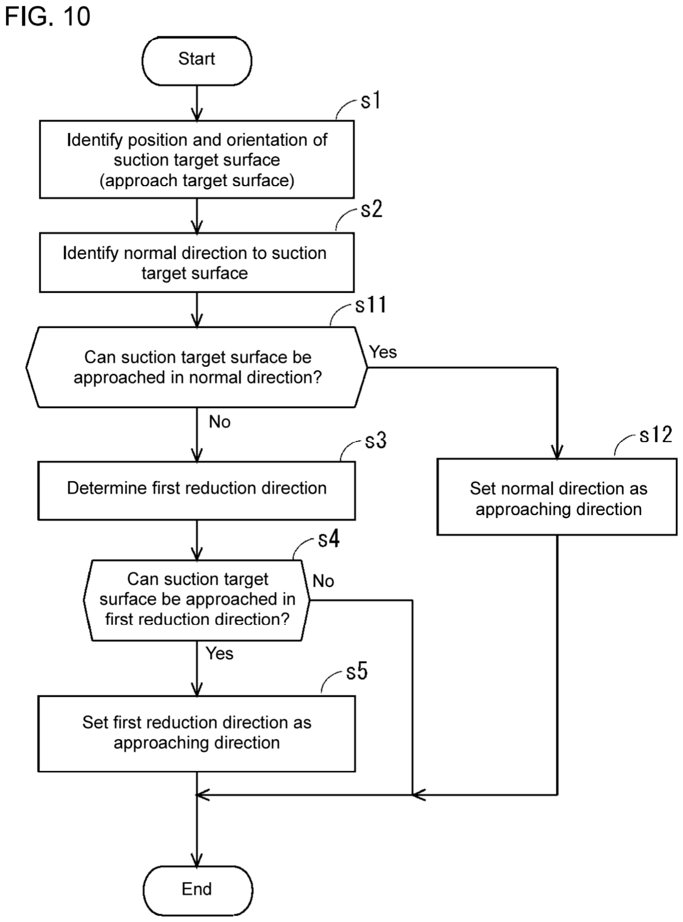

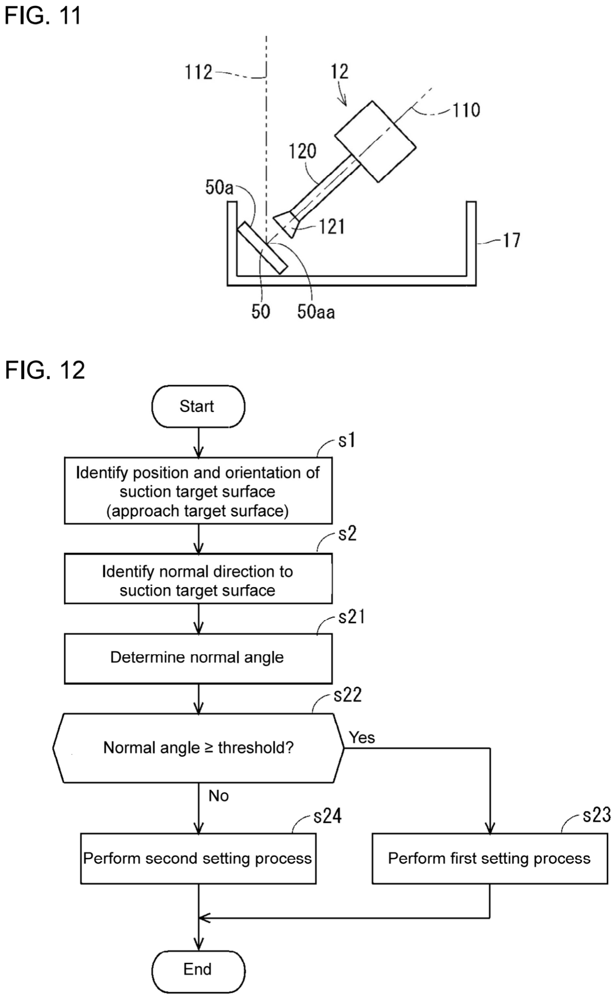

FIG. 10 is a flowchart of another example approaching direction setting process. In the example in FIG. 10, steps s1 and s2 are performed as described above. In step s11, the setter 21 determines, as in step s4 described above, whether the robot 10 can actually approach the approach target surface 50a in the normal direction 110. When the determination result is affirmative in step s11, the setter 21 sets the normal direction 110 as the approaching direction 100 in step s12. This sets the approaching direction 100 toward the approach object 50, and the approach setting process ends. After setting the normal direction 110 as the approaching direction 100, the controller 2 controls the robot 10 to approach the approach target surface 50a in the normal direction 110 and suck the approach target surface 50a. FIG. 11 is a schematic diagram of the robot 10 approaching the approach target surface 50a in the normal direction 110 in an example. Once the robot 10 sucks the object 50, the controller 2 thereafter operates in the same manner as or in a similar manner to the above.

However, in response to determination in step s11 that the robot 10 cannot actually approach the approach target surface 50a in the normal direction 110 due to, for example, interference between the robot 10 and the container 17, steps s3 and s4 are performed as described above. When the determination result is affirmative in step s4, step s5 is performed as described above to set the first reduction direction 113 as the approaching direction 100. This sets the approaching direction 100 toward the approach object 50, and the approaching direction setting process ends. After the approaching direction 100 is set and the approaching direction setting process ends, the controller 2 controls the robot 10 to approach the approach target surface 50a in the set approaching direction 100 and suck the approach target surface 50a in the same manner as or in a similar manner to the above. The controller 2 thereafter operates in the same manner as or in a similar manner to the above.

When the determination result is negative in step s4, the approach setting process ends without setting the approaching direction 100 toward the approach object 50. When the approach setting process ends without setting the approaching direction 100, the controller 2 determines a next approach object 50. The controller 2 then performs the approaching method setting process for the determined next approach object 50. The controller 2 thereafter operates in the same manner as or in a similar manner to the above.

As described above, in the example in FIG. 10, the setter 21 determines whether the robot 10 can actually approach the approach target surface 50a in the normal direction 110. When determining that the robot 10 can approach the approach target surface 50a in the normal direction 110, the setter 21 sets the normal direction 110 as the approaching direction 100. This can increase the suction success rate.

However, as in the example in FIG. 4, when the first reduction direction 113 is set as the approaching direction 100 without determining whether the robot 10 can approach the approach target surface 50a in the normal direction 110, the time taken for the approaching direction setting process can be shortened.

Note that the setter 21 may further determine whether the approach posture of the robot 10 approaching in the determined direction exceeds the limit posture of the robot 10 after determining the direction in which the robot 10 approaches the approach target surface 50a. More specifically, when the approach target surface 50a is determined to be approached in the normal direction 110, the setter 21 may also determine whether the angle of the approach posture of the robot 10 approaching in the normal direction 110 (or the normal angle β) exceeds an upper limit value L (described later) based on possible postures of the robot (also referred to as a posture upper limit value L). When the angle of the approach posture of the robot 10 approaching in the normal direction 110 does not exceed the posture upper limit value L, the setter 21 may set the normal direction 110 as the approaching direction. When the angle of the approach posture of the robot 10 approaching in the normal direction 110 exceeds the posture upper limit value L, the setter 21 may determine whether the robot 10 can approach in a direction based on the posture upper limit value L (described later). When the robot 10 cannot approach in the direction based on the posture upper limit value L, the setter 21 may determine whether the robot 10 can approach in the first reduction direction 113. When the angle of the approach posture of the robot 10 approaching in the normal direction 110 exceeds the posture upper limit value L, the setter 21 may determine whether the robot 10 can approach in the first reduction direction 113. When the robot 10 cannot approach in the first reduction direction 113, the setter 21 may determine whether the robot 10 can approach in the direction based on the posture upper limit value L. The setter 21 may then set the direction in which the robot 10 can approach as the approaching direction 100.

When the approach target surface 50a is determined to be approached in the first reduction direction 113, the setter 21 may also determine whether the angle of the approach posture of the robot 10 approaching in the first reduction direction 113 (or the angle between the reference direction 112 and the first reduction direction 113) exceeds the posture upper limit value L. When the angle of the approach posture of the robot 10 approaching in the first reduction direction 113 does not exceed the posture upper limit value L, the setter 21 may set the first reduction direction 113 as the approaching direction. When the angle of the approach posture of the robot 10 approaching in the first reduction direction 113 exceeds the posture upper limit value L, the setter 21 may determine whether the robot 10 can approach in the direction based on the posture upper limit value L. The setter 21 may then set the direction in which the robot 10 can approach as the approaching direction 100.

FIG. 12 is a flowchart of another example approaching direction setting process. In the example in FIG. 12, the setter 21 can perform a first setting process and a second setting process each using a different method to set the approaching direction 100. In the first setting process, the normal direction 110 is set as the approaching direction 100. In the second setting process, the first reduction direction 113 is set as the approaching direction 100. The setter 21 determines whether to perform the first setting process or the second setting process based on the normal angle β (refer to FIG. 7).

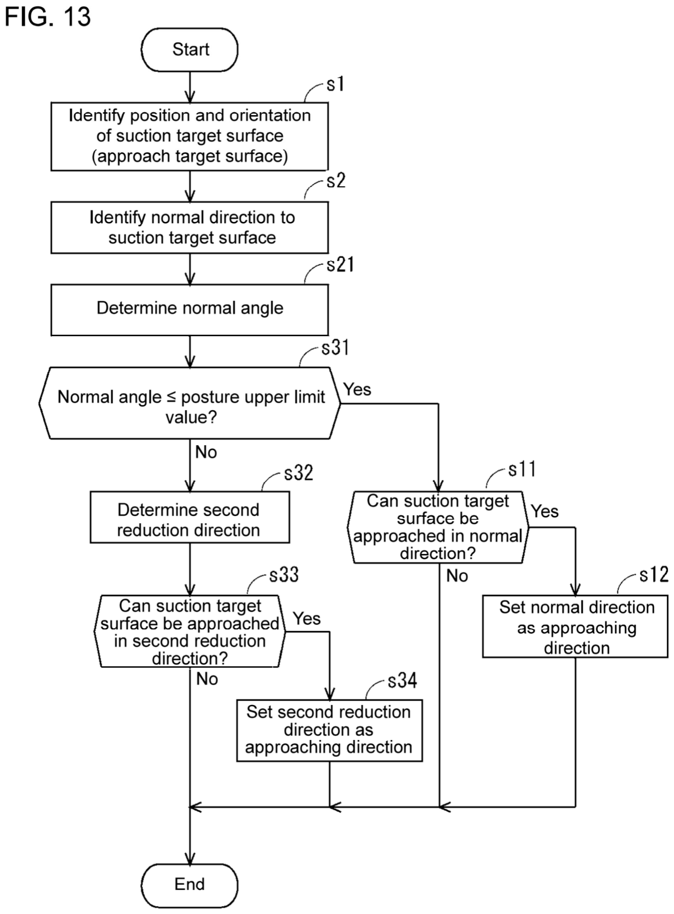

In the approaching direction setting process in FIG. 13, steps s1 and s2 are performed first as described above. In step 21, the setter 21 determines the normal angle β as the angle of the normal direction 110 with respect to the reference direction 112. In step s22, the setter 21 then determines whether the normal angle β is larger than or equal to a threshold. When the determination result is affirmative in step s22, or in other words, when the normal angle β is relatively large, the setter 21 performs the first setting process in step s23. In the first setting process, for example, steps s11 and s12 in FIG. 10 are performed. When the determination result is affirmative in step s11 and step s12 is performed, the normal direction 110 is set as the approaching direction 100, and the approach setting process ends. When the determination result is negative in step s11, the approach setting process ends without setting the approaching direction 100.

When the determination result is negative in step s22, or in other words, the normal angle β is relatively small, the setter 21 performs the second setting process in step s24. In the second setting process, for example, steps s3, s4, and s5 in FIG. 4 are performed. When the determination result is affirmative in step s4 and step s5 is performed, the first reduction direction 113 is set as the approaching direction 100, and the approaching direction setting process ends. When the determination result is negative in step s4, the approach setting process ends without setting the approaching direction 100.

As described above, when the robot 10 sucks the object 50, the camera 13 captures an image of the object 50 from above the container 17. When the actual normal angle β of the approach object 50 is large (in other words, when the approach target surface 50a is inclined greatly with respect to the reference direction 112), the identifier 20 may have reduced accuracy of identifying the position and the orientation of the approach target surface 50a (also referred to as identification accuracy for the approach target surface 50a) based on the range image included in the camera images. For example, when the range image is obtained with the stereo method and the actual normal angle β of the approach object 50 is large, an image of the approach target surface 50a is less likely to be captured by a stereo camera. This may reduce the identification accuracy for the approach target surface 50a. When the range image is obtained with the ToF method and the actual normal angle β of the approach object 50 is large, the light reflected on the approach target surface 50a is less likely to be received by a light-receiving sensor. This may reduce the identification accuracy for the approach target surface 50a. When the identification accuracy for the approach target surface 50a is reduced, the accuracy of identifying the normal direction 110 with the identifier 20 is reduced. When the accuracy of identifying the normal direction 110 is reduced, the first reduction direction 113 set by the setter 21 may tilt with respect to the actual normal direction 110 by an angle larger than the adjustment angle α. In other words, the set first reduction direction 113 may greatly tilt with respect to the actual normal direction 110. In this case, the robot 10 approaching the approach target surface 50a in the first reduction direction 113 set by the setter 21 may fail to suck the approach target surface 50a.

When the setter 21 determines whether to perform the first setting process or the second setting process based on the obtained normal angle β as in the example in FIG. 12, the setter 21 that has obtained a relatively large normal angle β can set the identified normal direction 110, in place of the first reduction direction 113, as the approaching direction 100. This reduces the likelihood that the set approaching direction 100 tilts with respect to the actual normal direction 110 when the actual normal angle β is large and the accuracy of identifying the normal direction 110 is low. The robot 10 thus easily sucks the approach object 50.

A user can appropriately set the threshold to be compared with the normal angle β in step 22. More specifically, the user may investigate the change in accuracy of identifying the normal direction 110 based on the range image for the magnitude of the actual normal angle β, for example. The user can then set the threshold based on the investigation result. The threshold is, for example, provided to the processing device 1 through the input unit 5.

In the first setting process, when the determination result is negative in step s11, steps s3, s4, and s5 may be performed as in FIG. 9. In this case, for example, in response to determination that the robot 10 cannot approach the approach target surface 50a in the normal direction 110 due to, for example, interference between the robot 10 and the container 17, the first reduction direction 113 may be set as the approaching direction 100. This increases the likelihood that the robot 10 can suck the approach target surface 50a.

FIG. 13 is a flowchart of another example approaching direction setting process. In the example in FIG. 13, steps s1, s2, and s21 are performed as described above. In step 31, the setter 21 determines whether the normal angle β is smaller than or equal to the upper limit value L (also referred to as the posture upper limit value L) based on possible postures of the robot 10.

The posture upper limit value L is set based on the possible postures of the robot 10. In this example, the posture of the robot 10 is determined by the posture of the arm 11. Thus, the posture upper limit value L is, for example, a value based on possible postures of the arm 11. For example, when the suction target surface 50a of the object 50 in the container 17 is visible from above the container 17 and the normal angle β of the suction target surface 50a is smaller than or equal to the posture upper limit value L, the posture upper limit value L allows the robot 10 to have a posture for approaching the suction target surface 50a in the normal direction 110 to the suction target surface 50a without interfering with a specific obstacle, independently of the direction in which the suction target surface 50a faces. When the suction target surface 50a of the object 50 in the container 17 is visible from above the container 17, the camera 13 above the container 17 can capture an image of the suction target surface 50a of the object 50 in the container 17. The camera 13 above the container 17 refers to the camera 13 for capturing an image of the container 17. When the camera 13 capturing an image of the container 17 can capture an image of the suction target surface 50a of the object 50 in the container 17 and the normal angle β of the suction target surface 50a is smaller than or equal to the posture upper limit value L, the robot 10 is likely to approach the suction target surface 50a, independently of the direction in which the suction target surface 50a faces, in the normal direction 110 to the suction target surface 50a without interfering with a specific obstacle.

A specific obstacle refers to an obstacle other than the container 17 that obstructs the movement of the robot 10. The specific obstacle is at a fixed position with a fixed shape during the operation of the robot 10. Examples of the specific obstacle include a safety fence surrounding the robot 10. Examples of the specific obstacle do not include the container 17.

The posture upper limit value L is set based on the results obtained by allowing the robot 10 to suck the objects 50 at different positions and in different orientations in the container 17 using the actual machine of the robot 10 or using the physics engine simulator for robots.

In response to determination in step s31 that the normal angle β is smaller than or equal to the posture upper limit value L, step s11 is performed as described above. In response to determination in step s11 that the robot 10 can approach the approach target surface 50a in the normal direction 110, step s12 is performed as described above. This sets the normal direction 110 as the approaching direction 100, and the approach setting process ends. However, in response to determination in step s11 that the robot 10 cannot approach in the normal direction 110, the approach setting process ends without setting the approaching direction 100.

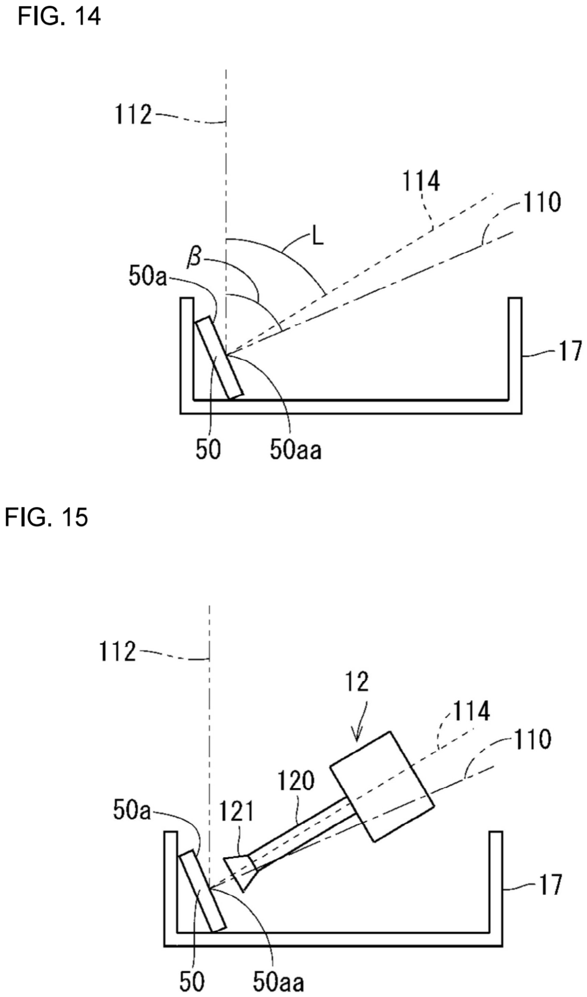

In response to determination in step s31 that the normal angle β is larger than the posture upper limit value, step s32 is performed. In step s32, as illustrated in FIG. 14, the setter 21 determines a direction 114 based on the posture upper limit value L. The direction 114 (also referred to as a second reduction direction 114) is shifted from the reference direction 112 by the posture upper limit value L toward the normal direction 110. To determine the direction 114 based on the posture upper limit value L, the setter 21 uses, for example, a specific plane including the normal direction 110 and the reference direction 112. The setter 21 then rotates the reference direction 112 by the posture upper limit value L toward the normal direction 110 using one end of a line extending in the reference direction 112 adjacent to the representative point 50aa as the pivot of the rotation on the specific plane to obtain the direction 114 based on the posture upper limit value L. The direction 114 (in other words, the second reduction direction 114) based on the posture upper limit value L and the reference direction 112 form an angle L. The direction 114 and the normal direction 110 form an angle (β - L).

After step s32, the setter 21 determines, in step s33, whether the robot 10 can actually approach the approach target surface 50a in the second reduction direction 114 as in step s4 described above. When the determination result is affirmative in step s33, the setter 21 sets the second reduction direction 114 as the approaching direction 100 in step s34. This sets the approaching direction 100 toward the approach object 50, and the approach setting process ends. After setting the second reduction direction 114 as the approaching direction 100, the controller 2 controls the robot 10 to approach the approach target surface 50a in the second reduction direction 114 and suck the approach target surface 50a. FIG. 15 is a schematic diagram of the robot 10 approaching the approach target surface 50a in the second reduction direction 114 in an example. Once the robot 10 sucks the object 50, the controller 2 thereafter operates in the same manner as or in a similar manner to the above.

When the determination result is negative in step s33, the approach setting process ends without setting the approaching direction 100 toward the approach object 50. The controller 2 then determines a next approach object 50. The controller 2 then performs the approaching method setting process for the determined next approach object 50. The controller 2 thereafter operates in the same manner as or in a similar manner to the above.

As in the example in FIG. 13, when the normal angle β of the approach object 50 is larger than the posture upper limit value L based on the possible postures of the robot 10, the second reduction direction 114 shifted from the reference direction 112 by the posture upper limit value L toward the normal direction 110 is set as the approaching direction 100. In this case, the second reduction direction 114 set as the approaching direction 100 is shifted from the normal direction 110 toward the reference direction 112 for the robot 10 to approach the object 50, as illustrated in FIGs. 14 and 15. In this case, the normal direction 110 to the approach target surface 50a tilts greatly with respect to the reference direction 112, increasing the likelihood that the robot 10 cannot approach in the normal direction 110. The robot 10 thus approaches the approach target surface 50a in the second reduction direction 114 shifted toward the reference direction 112 to easily suck the approach target surface 50a.

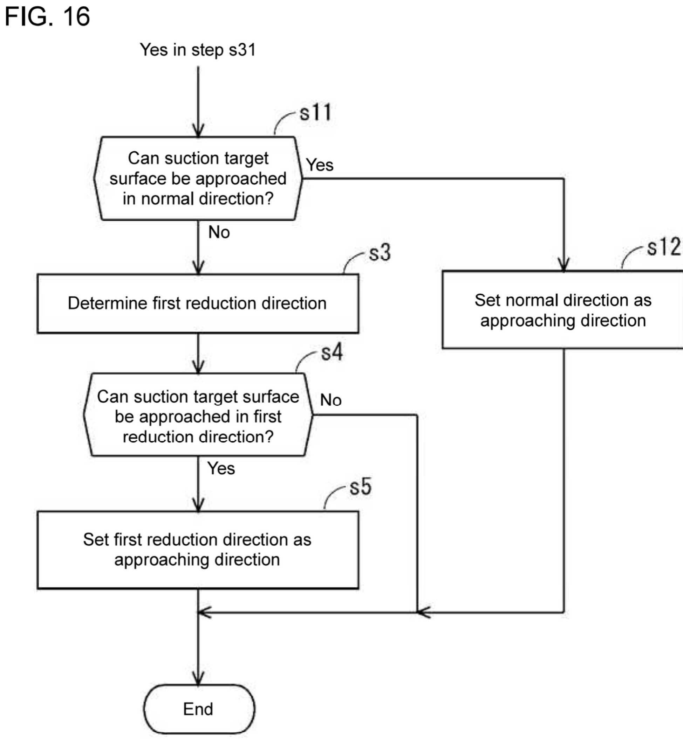

Note that steps s3, s4, and s5 are performed as illustrated in FIG. 16 when the determination result is negative in step s11 as in the example in FIG. 13. In this case, when the robot 10 cannot approach the approach target surface 50a in the normal direction 110, the first reduction direction 113 shifted from the normal direction 110 by the adjustment angle α toward the reference direction 112 can be set as the approaching direction 100. This allows the robot 10 to easily suck the approach target surface 50a.

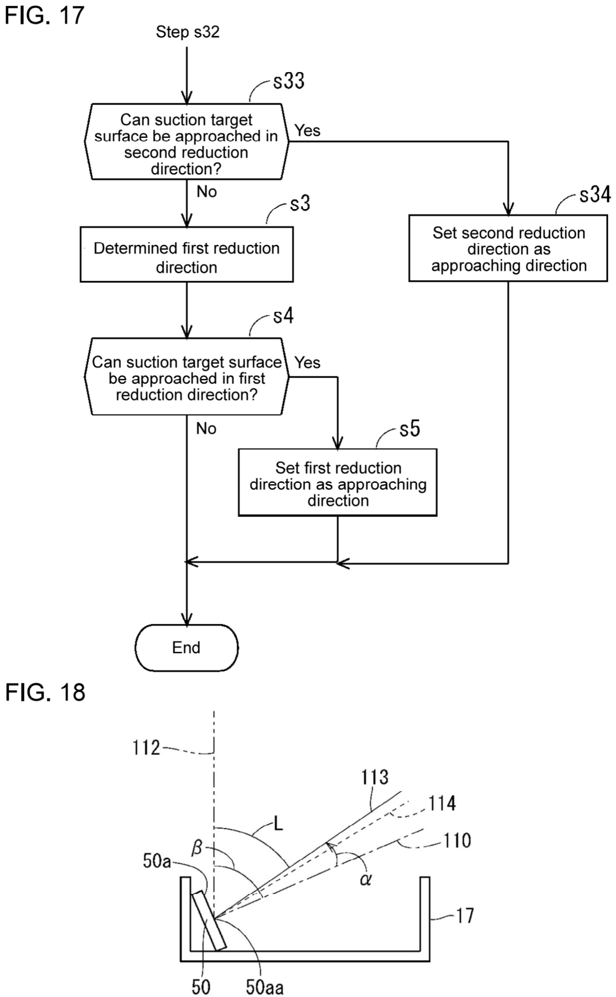

In the example in FIG. 13, in response to determination in step s33 that the robot 10 cannot approach the approach target surface 50a in the second reduction direction 114, steps s3, s4, and s5 may be performed as illustrated in FIG. 17. In this case, when the robot 10 cannot approach the approach target surface 50a in the second reduction direction 114, the first reduction direction 113 shifted from the normal direction 110 by the adjustment angle α toward the reference direction 112 can be set as the approaching direction 100.

FIG. 18 is a schematic diagram of the first reduction direction 113 and the second reduction direction 114 in an example when the normal direction 110 forms an angle exceeding the posture upper limit value L. The posture upper limit value L is set to a value greater than the adjustment angle α. For example, the posture upper limit value L is set to 35 degrees, and the adjustment angle α is set to 20 degrees. In this case, when the normal angle β is 40 degrees, the angle between the first reduction direction 113 and the reference direction 112 is 20 degrees, which is smaller than the posture upper limit value L (or the angle between the second reduction direction 114 and the reference direction 112). When the normal angle β is 50 degrees, the angle between the first reduction direction 113 and the reference direction 112 is 30 degrees, which is also smaller than the posture upper limit value L. When the angle between the first reduction direction 113 and the reference direction 112 is smaller than the posture upper limit value L, the first reduction direction 113 is shifted further toward the reference direction 112 for the robot 10 to approach the object 50 than the second reduction direction 114, as illustrated in FIG. 18. When the robot 10 cannot approach in the second reduction direction 114, the first reduction direction 113 shifted further toward the reference direction 112 than the second reduction direction 114 is set as the approaching direction 100, allowing the robot 10 to easily suck the approach target surface 50a.

Note that the approaching direction setting process may end without performing steps s3, s4, and s5 when the normal angle β is sufficiently large to cause an angle between the first reduction direction 113 and the reference direction 112 to be larger than or equal to the posture upper limit value L and when the determination result is negative in step s33. When the normal angle β is sufficiently large to cause an angle between the first reduction direction 113 and the reference direction 112 to be larger than or equal to the posture upper limit value L, the approaching direction setting process may end without performing step s32 and subsequent steps.

The first setting process in the example in FIG. 12 described above may include step s31 and subsequent steps (in other words, steps s31, s32, s33, s34, s11, and s12) in the flowchart in FIG. 13. In this case, the threshold to be compared with the normal angle β in step s22 in FIG. 12 is set to a value less than the posture upper limit value L. For example, the threshold is set to 30 degrees, and the posture upper limit value L is set to 35 degrees. When step s31 and the subsequent steps in the flowchart in FIG. 13 are performed in the first setting process and the determination result is negative in step s11, steps s3, s4, and s5 may be performed as in FIG. 16. When step s31 and the subsequent steps in the flowchart in FIG. 13 are performed in the first setting process and the determination result is negative in step s33, steps s3, s4, and s5 may be performed as in FIG. 17.

As described above, when the actual normal angle β of the approach object 50 is large, the identification accuracy for the approach target surface 50a may be reduced. When the identification accuracy for the approach target surface 50a is reduced, the accuracy of identifying the normal direction 110 with the identifier 20 is reduced. When the accuracy of identifying the normal direction 110 is reduced, the first reduction direction 113 set by the setter 21 may tilt with respect to the actual normal direction 110 by an angle larger than the adjustment angle α. In other words, the set first reduction direction 113 may greatly tilt with respect to the actual normal direction 110. This may cause the robot 10 to fail to suck the approach object 50 when the robot 10 approaches the approach object 50 in the first reduction direction 113.

Thus, the setter 21 may change the adjustment angle α based on the obtained normal angle β. More specifically, the setter 21 may set a smaller adjustment angle α for a larger normal angle β obtained. This reduces the likelihood that the first reduction direction 113 greatly tilts with respect to the actual normal direction 110. The robot 10 is thus less likely to fail to suck the approach object 50. For example, the setter 21 may set the adjustment angle α to 15 degrees when the normal angle β is larger than 30 degrees, and may set the adjustment angle α to 20 degrees when the normal angle β is smaller than or equal to 30 degrees. Note that the setter 21 may change the adjustment angle α for three steps or more as appropriate based on the normal angle β.

When the container 17 is deep (in other words, when the wall 170 is high) and the normal angle β is large with a small adjustment angle α, the robot 10 approaching the approach object 50 in the first reduction direction 113 may not approach the approach object 50 due to interference with the high wall 170 of the container 17.

Thus, when the identification accuracy for the approach target surface 50a is not greatly reduced with a large actual normal angle β of the approach object 50 and the container 17 is deep, the setter 21 may set a larger adjustment angle α for a larger normal angle β obtained. This allows the robot 10 to easily approach the approach object 50 in the first reduction direction 113 when the normal angle β is large. For example, the setter 21 may set the adjustment angle α to 25 degrees when the normal angle β is larger than 30 degrees, and may set the adjustment angle α to 20 degrees when the normal angle β is smaller than or equal to 30 degrees.

The setter 21 may set the adjustment angle α based on the suction portion information on the suction portion 121 and the object information on the object 50. In this case, for example, the setter 21 may set the adjustment angle α based on an information table 500 showing the relationship between the suction portion information, the object information, and the adjustment angle α. The setter 21 can refer to the information table 500 to identify the adjustment angle α as appropriate for the suction portion information and the object information.

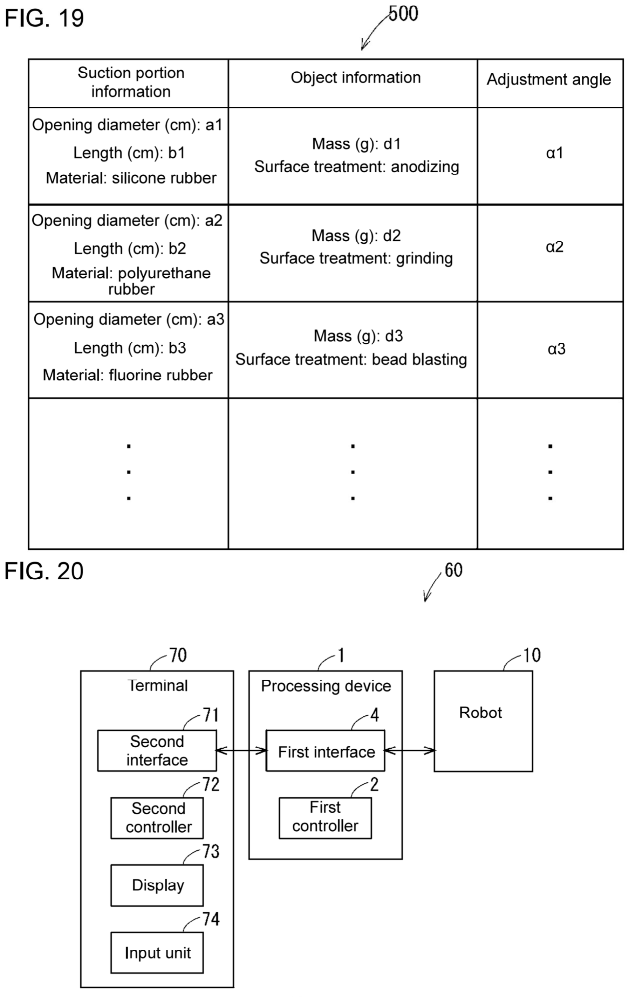

FIG. 19 is a schematic diagram of an example information table 500. The suction portion information in the information table 500 includes, for example, the diameter of the suction opening 121a of the suction portion 121 (also simply referred to as the opening diameter), the length of the suction portion 121, and the material of the suction portion 121. The object information in the information table 500 includes the mass of the object 50 and information for identifying the surface treatment (e.g., anodizing, bead blasting, or grinding) performed on the object 50. The information table 500 in FIG. 19 shows that when the opening diameter of the suction portion 121 is a1, the length of the suction portion 121 is b1, the material of the suction portion 121 is silicone rubber, the mass of the object 50 is d1, and the surface treatment performed on the object 50 is anodizing, the adjustment angle α is set to α1. The information table 500 also shows that when the opening diameter of the suction portion 121 is a2, the length of the suction portion 121 is b2, the material of the suction portion 121 is polyurethane rubber, the mass of the object 50 is d2, and the surface treatment performed on the object 50 is grinding, the adjustment angle α is set to α2. The information table 500 also shows that when the opening diameter of the suction portion 121 is a3, the length of the suction portion 121 is b3, the material of the suction portion 121 is fluorine rubber, the mass of the object 50 is d3, and the surface treatment performed on the object 50 is bead blasting, the adjustment angle α is set to α3.

The storage 3 stores the suction portion information on the suction portion 121 currently included in the robot 10 and the object information on the current object 50. The setter 21 obtains, from the information table 500, the value of the adjustment angle α corresponding to the suction portion information and the object information in the storage 3. The setter 21 then uses the value obtained from the information table 500 as the value of the adjustment angle α.

The information table 500 may be generated based on the suction success rate in the first reduction direction and the suction success rate in the normal direction that are calculated using the actual machine of the robot 10. The information table 500 may also be generated based on the suction success rate in the first reduction direction and the suction success rate in the normal direction that are calculated using the physics engine simulator for robots. For example, when the opening diameter of the suction portion 121 is a1, the length of the suction portion 121 is b1, the material of the suction portion 121 is silicone rubber, the mass of the object 50 is d1, and the surface treatment performed on the object 50 is anodizing, the value of α1 is set to allow the suction success rate in the first reduction direction to be greater than or equal to a predetermined percent of the suction success rate in the normal direction. The information table 500 is input into the processing device 1 through, for example, the input unit 5. The information table 500 input into the processing device 1 is stored into the storage 3.

Note that the setter 21 may determine the maximum value of the adjustment angle α using the information table 500 and set other values of the adjustment angle α based on the maximum value determined using the information table 500 to set a smaller adjustment angle α for a larger normal angle β obtained. To set a larger adjustment angle α for a larger normal angle β obtained, the setter 21 may determine the minimum value of the adjustment angle α using the information table 500 and set other values of the adjustment angle α based on the minimum value determined using the information table 500.

The reference direction 112 described above may be specified with the robot coordinate system or the camera coordinate system. The robot coordinate system is a three-dimensional orthogonal coordinate system set for the robot 10. To control the robot 10, the controller 2 manages the position of the robot 10 in the robot coordinate system. The camera coordinate system is a three-dimensional orthogonal coordinate system set for the camera 13. The camera coordinate system indicates the positions of the pixels in the color image and the range image generated by the camera 13.

For example, the reference direction 112 may be specified with the robot coordinate system. In other words, the reference direction 112 may be set in the robot coordinate system. In this case, when the orientation of the opening 17a (or the orientation of the opening plane 17aa) of the container 17 changes, the reference direction 112 in the robot coordinate system changes. Thus, the reference direction 112 is respecified as appropriate for the change in the orientation of the opening 17a.

The reference direction 112 may be specified with the camera coordinate system. In other words, the reference direction 112 may be set in the camera coordinate system. The camera 13 is fixed to the end effector 12. Thus, when the camera 13 captures an image of the object 50 in the container 17 from above the container 17 and the orientation of the opening 17a of the container 17 changes, the camera 13 can maintain a fixed orientation for the orientation of the opening 17a. Thus, when the reference direction 112 is specified with the camera coordinate system, the reference direction 112 is not to be respecified for the change in the orientation of the opening 17a. When the robot 10 sequentially sucks and holds objects 50 in multiple containers 17 each having an opening 17a with a different orientation, a common reference direction 112 can be specified for the multiple containers 17 instead of being separately specified for each of the multiple containers 17. Thus, specifying the reference direction 112 with the camera coordinate system reduces the load on the user.

Note that the approaching direction 100 may be set in the camera coordinate system in the approaching direction setting process described above. In this case, the reference direction 112 may be set on any one of an x-axis, a y-axis, or a z-axis of the camera coordinate system. This reduces the amount of calculation in determining the first reduction direction 113 and the second reduction direction 114 that are set based on the reference direction 112. When the z-axis of the camera coordinate system is perpendicular to the opening plane 17aa for the camera 13 capturing an image of the object 50 in the container 17 from above the container 17, the reference direction 112 may be set on the z-axis of the camera coordinate system. In the approaching direction setting process, when the approaching direction 100 is set in the camera coordinate system, the controller 2 converts the approaching direction 100 set in the camera coordinate system to the approaching direction 100 in the robot coordinate system to control the robot 10.

In the approaching direction setting process, the approaching direction 100 may be set in the robot coordinate system. In this case, when the reference direction 112 is specified in the camera coordinate system, the controller 2 converts the reference direction 112 in the camera coordinate system to the reference direction 112 in the robot coordinate system to set the approaching direction 100.

Although the camera 13 is a three-dimensional camera in the above example, the camera 13 may be a two-dimensional camera that generates color images. In this case, the identifier 20 identifies the position and the orientation of the approach object 50 based on the color images. The identifier 20 then identifies the position and the orientation of the approach target surface 50a based on the position and the orientation of the identified approach object 50 and suction target surface information indicating the position and the range of the suction target surface on the surface of the object 50. The suction target surface information is prestored in the storage 3.

In the above example, the adjustment angle α is smaller than the normal angle β. However, the normal angle β may be smaller than the adjustment angle α. In this case, the approaching direction 100 for the suction portion 121 may be set opposite the normal direction 110 from the reference direction 112.

Although the approaching direction 100 is adjusted toward the reference direction 112 in the above example, the present disclosure is not limited to the above example. For example, when the object 50 is near the wall of the container 17, the approaching direction 100 set toward the reference direction 112 may interfere with the wall of the container 17. In this case, for example, the approaching direction 100 may be set away from the reference direction 112. In this case, after determination that a first approaching direction rotationally shifted toward the reference direction 112 by an adjustment angle α interferes with the wall of the container 17, determination may be performed to determine whether a second approaching direction rotationally shifted away from the reference direction 112 interferes with the wall of the container 17. For example, when the normal angle β is smaller than a predetermined value, determination may be performed for interference of the second approaching direction without performing determination for interference of the first approaching direction. In these cases, the adjustment angle α for the second approaching direction may be set to be smaller than the adjustment angle α for the first approaching direction.

Although the approaching direction 100 is set based on the reference direction 112 in the above example, the reference direction 112 may not be set. In this case, for example, a maximum adjustment angle α is set as the limit. The adjustment angle α is then set to be closer to the maximum adjustment angle α in a stepwise manner. Determination is performed for interference of an approaching direction 100 at the adjustment angle α set in a stepwise manner. When the determination result indicates no interference, the approaching direction 100 may be set. In this case, for example, the adjustment angle α may be changed to increase the height of a point in the normal direction 110, or changed to move away from the object 50 and the wall surface of the container 17 being identified based on the camera images.

Although the adjustment angle α is changed to increase the height of a point in the normal direction 110 in the above example, the present disclosure is not limited to the above example. For example, when the flat surface including the opening plane 17aa of the container 17 passes through the x-axis and y-axis, the adjustment angle α may be changed to change the value on the x-axis and the value on the y-axis.

### Robot Control System

In the present embodiment, the processing device 1 may be connected to and communicate with the robot 10 as a part of a robot control system 60 to control the robot 10. FIG. 20 is a block diagram of the robot control system 60, illustrating an example structure. As illustrated in FIG. 20, the robot control system 60 includes, for example, the processing device 1 and the robot 10 connected to the processing device 1 described above. In the present embodiment, the robot control system 60 further includes a terminal 70 connected to the processing device 1. More specifically, the processing device 1 and the terminal 70 are connected to each other with the interface 4 (also referred to as a first interface 4) in the processing device 1 and a second interface 71 in the terminal 70 connected to communicate with each other. Note that the second interface 71 may have the same structure as or a similar structure to the first interface 4.

The terminal 70 may include a second controller 72 and a display 73. The second controller 72 may obtain intended information from the controller 2 in the processing device 1 (also referred to as a first controller 2) through the first interface 4 and the second interface 71 and cause the display 73 to display the information. For example, the second controller 72 may cause the display 73 to visually display the approaching direction of the suction portion 121 toward the object 50. More specifically, the second controller 72 may cause the display 73 to display the object 50 and information indicating the approaching direction of the suction portion 121 toward the suction target surface 50a of the object 50. The information indicating the approaching direction may be, for example, a line segment or an arrow connecting to the representative point 50aa on the suction target surface 50a, animation of the suction portion 121 approaching the suction target surface 50a in the approaching direction, an image illustrating the overall positional relationship between the suction portion 121 and the suction target surface 50a on an approach path, or an image of the suction target surface 50a as viewed from the approaching direction. This allows, for example, the user to determine the manner in which the robot 10 approaches the object 50 before starting an operation.

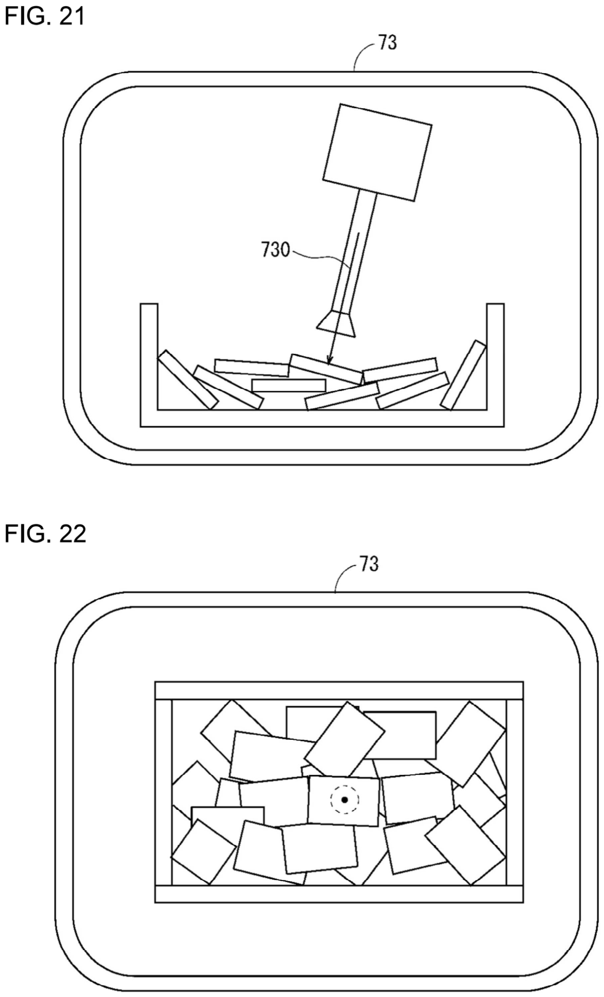

FIGs. 21 and 22 are schematic diagrams of the display 73, each illustrating an example display. FIG. 21 illustrates an example image on the display 73 displaying animation of the suction portion 121 approaching the object 50 as viewed in a lateral direction. FIG. 22 illustrates an example image on the display 73 displaying animation of the suction portion 121 approaching the object 50 as viewed from above. FIG. 21 illustrates the approaching direction of the suction portion 121 with an arrow 730. FIG. 22 illustrates the overall positional relationship between the suction portion 121 and the suction target surface 50a on the approach path.

Note that the first controller 2 can also obtain information for controlling the robot 10 from the second controller 72. The second controller 72 in the terminal 70 may have the structure equivalent to the first controller 2 in the processing device 1. The display 73 in the terminal 70 may be, for example, a touchscreen display or a liquid crystal display.

The information indicating the approaching direction may be multiple pieces of information displayed at the same time or at different times. When multiple pieces of information are displayed at the same time, for example, an arrow indicating the approaching direction and animation of the suction portion 121 approaching the suction target surface 50a on the arrow may be displayed at the same time. When multiple different pieces of information are displayed at different times, for example, the approach path of the suction portion 121 parallel to the approaching direction may be displayed first. The display may then be switched to an image of the suction target surface 50a as viewed in the approaching direction to display the suction portion 121 coming in contact with the suction target surface 50a.

The terminal 70 may further include an input unit 74. When the display 73 displays information indicating the object 50 and the approaching direction, for example, the user can select at least one of multiple objects 50 placed in the container 17 through the input unit 74. The display 73 may then display information indicating the approaching direction for each of the selected objects 50. The user can thus determine whether the robot 10 can approach the selected object 50. Note that the input unit 74 in the terminal 70 may have the structure equivalent to the input unit 5 in the processing device 1. When the robot control system 60 includes the input unit 74 in the terminal 70, the input unit 74 may function as the input unit 5 in the processing device 1.

The information indicating the approaching direction on the display 73 may be changed by the user through the input unit 74. In this case, the terminal 70 may receive, for example, a user operation to select information indicating the approaching direction displayed as a line and move the approaching direction on the display 73 through the input unit 74. The first controller 2 may determine, based on the approaching direction changed through the user operation, whether the robot 10 approaching in the changed approaching direction can hold the object 50. In this case, the second controller 72 may receive, from the first controller 2, the determination result indicating the likelihood of the robot 10 holding the object 50 based on the changed approaching direction. The second controller 72 may then cause the display 73 to display the determination result indicating the likelihood of the robot 10 holding the object 50 based on the changed approaching direction. Note that the determination result may be binary indicating whether the robot 10 can hold the object 50. The determination result may also be numerical indicating the suction success rate. For example, the determination results may include a highlighted approaching direction to indicate that the approaching direction effectively allows the object 50 to be held. The determination results may also include a shadowed approaching direction to indicate that the approaching direction does not allow the object 50 to be held.

The second controller 72 may cause the display 73 to display information indicating the normal direction to the suction target surface 50a of the object 50. The information indicating the normal direction may be, for example, a line segment or an arrow connecting to the representative point 50aa on the suction target surface 50a, animation of the suction portion 121 approaching the suction target surface 50a in the normal direction, an image illustrating the overall positional relationship between the suction portion 121 and the suction target surface 50a on a normal, or an image of the suction target surface 50a as viewed from in normal direction. This allows, for example, the user to determine the manner in which the robot 10 approaches the object.

When the display 73 displays information indicating the object 50 and the normal direction, for example, the user can select at least one of multiple objects 50 placed in the container 17 through the input unit 74. The display 73 may then display information indicating the normal direction for each of the selected objects 50. The user can thus determine whether the robot 10 can approach the selected object 50 in the normal direction.

The second controller 72 may cause the display 73 to display information indicating the approaching direction and the normal direction in a comparable manner. This allows the user to easily determine the degree of tilt in the approaching direction with respect to the normal direction. Note that the second controller 72 may cause the display 73 to display the reference direction 112 for approaching toward the object 50. The second controller 72 may cause the display 73 to display the adjustment angle α. The second controller 72 may cause the display 73 to display the normal angle β.

The processing device and the robot control system have been described in detail, but the above structures are illustrative in all respects, and the disclosure is not limited to the above structures. The above embodiments may be combined in any manner unless any contradiction arises. Many examples other than those illustrated above may also be implemented without departing from the scope of the present disclosure.

The present disclosure provides the structures described below.

In one embodiment, (1) a processing device is a device for controlling a robot including a suction portion being elastic to suck and hold a target object. The processing device includes a controller that controls the robot. The controller causes the suction portion to come in contact with the target object in a direction different from a normal direction to a suction target surface of the target object and causes the suction portion to suck the target object.
(2) In the processing device according to (1), the controller includes an identifier that identifies the normal direction to the suction target surface of the target object, and a setter that sets an approaching direction for the suction portion to come in contact with the target object based on the normal direction identified by the identifier and a reference direction for the robot to approach the target object.
(3) In the processing device according to (2), the setter sets, as the approaching direction, a direction based on an adjustment angle. The direction based on the adjustment angle is a direction being shifted from the normal direction by the adjustment angle toward the reference direction.
(4) In the processing device according to (3), the setter determines whether the robot is likely to approach the suction target surface in the normal direction. The setter sets the normal direction as the approaching direction when the robot is determined to be likely to approach the suction target surface in the normal direction. The setter sets the direction based on the adjustment angle as the approaching direction when the robot is determined not to be likely to approach the suction target surface in the normal direction.
(5) In the processing device according to (3), the setter sets the direction based on the adjustment angle as the approaching direction without determining whether the robot is likely to approach the suction target surface in the normal direction.
(6) In the processing device according to any one of (2) to (5), the setter sets the approaching direction based on a limit posture of the robot.
(7) In the processing device according to (3), the setter performs a first setting process and a second setting process each using a different method to set the approaching direction. The setter sets the normal direction as the approaching direction in the first setting process. The setter sets the direction based on the adjustment angle as the approaching direction in the second setting process. The setter determines whether to perform the first setting process or the second setting process based on a normal angle being an angle of the normal direction with respect to the reference direction.
(8) In the processing device according to (7), in the first setting process, the setter determines whether the robot is likely to approach the suction target surface in the normal direction. The setter sets the normal direction as the approaching direction when the robot is determined to be likely to approach the suction target surface in the normal direction. The setter sets the direction based on the adjustment angle as the approaching direction when the robot is determined not to be likely to approach the suction target surface in the normal direction.
(9) In the processing device according to (7), in the first setting process, the setter determines whether the normal angle is smaller than or equal to an upper limit value based on a possible posture of the robot. The setter sets the normal direction as the approaching direction when the normal angle is smaller than or equal to the upper limit value. The setter sets, as the approaching direction, a direction based on the upper limit value when the normal angle is larger than the upper limit value. The direction based on the upper limit value is a direction shifted from the reference direction by the upper limit value toward the normal direction.
(10) In the processing device according to (9), in the first setting process, the setter determines whether the robot is likely to approach the suction target surface in the normal direction when the normal angle is smaller than or equal to the upper limit value. The setter sets the normal direction as the approaching direction when the robot is determined to be likely to approach the suction target surface in the normal direction. The setter sets the direction based on the upper limit value as the approaching direction when the robot is determined not to be likely to approach the suction target surface in the normal direction.
(11) In the processing device according to (9) or (10), in the first setting process, the setter determines whether the robot is likely to approach the suction target surface in the direction based on the upper limit value when the normal angle is larger than the upper limit value. The setter sets the direction based on the upper limit value as the approaching direction when the robot is determined to be likely to approach the suction target surface in the direction based on the upper limit value. The setter sets the direction based on the adjustment angle as the approaching direction when the robot is determined not to be likely to approach the suction target surface in the direction based on the upper limit value.
(12) In the processing device according to (2), the setter determines whether a normal angle being an angle of the normal direction with respect to the reference direction is smaller than or equal to an upper limit value based on a possible posture of the robot. The setter sets the normal direction as the approaching direction when the normal angle is smaller than or equal to the upper limit value. The setter sets, as the approaching direction, a direction based on the upper limit value when the normal angle is larger than the upper limit value. The direction based on the upper limit value is a direction shifted from the reference direction by the upper limit value toward the normal direction.
(13) In the processing device according to (12), the setter determines whether the robot is likely to approach the suction target surface in the normal direction when the normal angle is smaller than or equal to the upper limit value. The setter sets the normal direction as the approaching direction when the robot is determined to be likely to approach the suction target surface in the normal direction. The setter sets, as the approaching direction, a direction based on an adjustment angle when the robot is determined not to be likely to approach the suction target surface in the normal direction. The direction based on the adjustment angle is a direction shifted from the normal direction by the adjustment angle toward the reference direction.
(14) In the processing device according to (12) or (13), the setter determines whether the robot is likely to approach the suction target surface in the direction based on the upper limit value when the normal angle is larger than the upper limit value. The setter sets the direction based on the upper limit value as the approaching direction when the robot is determined to be likely to approach the suction target surface in the direction based on the upper limit value. The setter sets, as the approaching direction, a direction based on an adjustment angle when the robot is determined not to be likely to approach the suction target surface in the direction based on the upper limit value. The direction based on the adjustment angle is a direction shifted from the normal direction by the adjustment angle toward the reference direction.
(15) In the processing device according to any one of (3) to (11), (13), and (14), the setter changes the adjustment angle based on the normal angle.
(16) In the processing device according to any one of (3) to (11) and (13) to (15), the setter sets the adjustment angle based on suction portion information on the suction portion included in the robot to suck the target object and object information on the target object.
(17) A robot control system includes the processing device according to any one of (1) to (16), and a robot connected to the processing device.
(18) A program is a program for causing a computer to function as the processing device according to any one of (1) to (16).
(19) A processing device is a device for controlling a robot including a suction portion to suck and hold a target object in a movable manner. The processing device includes a controller that controls the robot to cause the suction portion to come in contact with a suction target surface of the target object with a first end of the suction portion contracted more than a second end opposite the first end.
(20) A terminal includes a display and a controller. The controller obtains an approaching direction for a robot that sucks and holds a target object to approach the target object in a direction different from a normal direction to a suction target surface of the target object and causes the display to display the approaching direction in a perceivable manner.

### REFERENCE SIGNS

- 1: processing device
- 10: robot
- 2: controller (first controller)
- 20: identifier
- 21: setter
- 30: program
- 50: target object
- 50a: suction target surface
- 60: robot control system
- 70: terminal
- 72: second controller
- 73: display
- 110: normal direction
- 121: suction portion
- 112: reference direction
- 130: first reduction direction
- 140: second reduction direction
- L: upper limit value
- α: adjustment angle
- β: normal angle

## Claims

1. A processing device for controlling a robot including a suction portion being elastic to suck and hold a target object, the processing device comprising:
a controller configured to control the robot, the controller being configured to cause the suction portion to come in contact with the target object in a direction different from a normal direction to a suction target surface of the target object and cause the suction portion to suck the target object.

2. The processing device according to claim 1, wherein
the controller includes
an identifier configured to identify the normal direction to the suction target surface of the target object, and
a setter configured to set an approaching direction for the suction portion to come in contact with the target object based on the normal direction identified by the identifier and a reference direction for the robot to approach the target object.

3. The processing device according to claim 2, wherein
the setter is configured to set, as the approaching direction, a direction based on an adjustment angle, and the direction based on the adjustment angle is a direction shifted from the normal direction by the adjustment angle toward the reference direction.

4. The processing device according to claim 3, wherein
the setter is configured to determine whether the robot is likely to approach the suction target surface in the normal direction,
the setter is configured to set the normal direction as the approaching direction when the robot is determined to be likely to approach the suction target surface in the normal direction, and
the setter is configured to set the direction based on the adjustment angle as the approaching direction when the robot is determined not to be likely to approach the suction target surface in the normal direction.

5. The processing device according to claim 3, wherein
the setter is configured to set the direction based on the adjustment angle as the approaching direction without determining whether the robot is likely to approach the suction target surface in the normal direction.

6. The processing device according to any one of claims 2 to 5, wherein
the setter is configured to set the approaching direction based on a limit posture of the robot.

7. The processing device according to claim 3, wherein
the setter is configured to perform a first setting process and a second setting process each using a different method to set the approaching direction,
the setter is configured to set the normal direction as the approaching direction in the first setting process,
the setter is configured to set the direction based on the adjustment angle as the approaching direction in the second setting process, and
the setter is configured to determine whether to perform the first setting process or the second setting process based on a normal angle being an angle of the normal direction with respect to the reference direction.

8. The processing device according to claim 7, wherein
in the first setting process,
the setter is configured to determine whether the robot is likely to approach the suction target surface in the normal direction,
the setter is configured to set the normal direction as the approaching direction when the robot is determined to be likely to approach the suction target surface in the normal direction, and
the setter is configured to set the direction based on the adjustment angle as the approaching direction when the robot is determined not to be likely to approach the suction target surface in the normal direction.

9. The processing device according to claim 7, wherein
in the first setting process,
the setter is configured to determine whether the normal angle is smaller than or equal to an upper limit value based on a possible posture of the robot,
the setter is configured to set the normal direction as the approaching direction when the normal angle is smaller than or equal to the upper limit value, and
the setter is configured to set, as the approaching direction, a direction based on the upper limit value when the normal angle is larger than the upper limit value, and the direction based on the upper limit value is a direction shifted from the reference direction by the upper limit value toward the normal direction.

10. The processing device according to claim 9, wherein
in the first setting process,
the setter is configured to determine whether the robot is likely to approach the suction target surface in the normal direction when the normal angle is smaller than or equal to the upper limit value,
the setter is configured to set the normal direction as the approaching direction when the robot is determined to be likely to approach the suction target surface in the normal direction, and
the setter is configured to set the direction based on the upper limit value as the approaching direction when the robot is determined not to be likely to approach the suction target surface in the normal direction.

11. The processing device according to claim 9 or claim 10, wherein
in the first setting process,
the setter is configured to determine whether the robot is likely to approach the suction target surface in the direction based on the upper limit value when the normal angle is larger than the upper limit value,
the setter is configured to set the direction based on the upper limit value as the approaching direction when the robot is determined to be likely to approach the suction target surface in the direction based on the upper limit value, and
the setter is configured to set the direction based on the adjustment angle as the approaching direction when the robot is determined not to be likely to approach the suction target surface in the direction based on the upper limit value.

12. The processing device according to claim 2, wherein
the setter is configured to determine whether a normal angle being an angle of the normal direction with respect to the reference direction is smaller than or equal to an upper limit value based on a possible posture of the robot,
the setter is configured to set the normal direction as the approaching direction when the normal angle is smaller than or equal to the upper limit value, and
the setter is configured to set, as the approaching direction, a direction based on the upper limit value when the normal angle is larger than the upper limit value, and the direction based on the upper limit value is a direction shifted from the reference direction by the upper limit value toward the normal direction.

13. The processing device according to claim 12, wherein
the setter is configured to determine whether the robot is likely to approach the suction target surface in the normal direction when the normal angle is smaller than or equal to the upper limit value,
the setter is configured to set the normal direction as the approaching direction when the robot is determined to be likely to approach the suction target surface in the normal direction, and
the setter is configured to set, as the approaching direction, a direction based on an adjustment angle when the robot is determined not to be likely to approach the suction target surface in the normal direction, and the direction based on the adjustment angle is a direction shifted from the normal direction by the adjustment angle toward the reference direction.

14. The processing device according to claim 12 or claim 13, wherein
the setter is configured to determine whether the robot is likely to approach the suction target surface in the direction based on the upper limit value when the normal angle is larger than the upper limit value,
the setter is configured to set the direction based on the upper limit value as the approaching direction when the robot is determined to be likely to approach the suction target surface in the direction based on the upper limit value, and
the setter is configured to set, as the approaching direction, a direction based on an adjustment angle when the robot is determined not to be likely to approach the suction target surface in the direction based on the upper limit value, and the direction based on the adjustment angle is a direction shifted from the normal direction by the adjustment angle toward the reference direction.

15. The processing device according to any one of claims 3 to 11, 13, and 14, wherein
the setter is configured to change the adjustment angle based on the normal angle.

16. The processing device according to any one of claims 3 to 11 and 13 to 15, wherein
the setter is configured to set the adjustment angle based on suction portion information on the suction portion included in the robot to suck the target object and object information on the target object.

17. A robot control system, comprising:
the processing device according to any one of claims 1 to 16; and
a robot connected to the processing device.

18. A program for causing a computer to function as the processing device according to any one of claims 1 to 16.

19. A processing device for controlling a robot including a suction portion to suck and hold a target object in a movable manner, the processing device comprising:
a controller configured to control the robot to cause the suction portion to come in contact with a suction target surface of the target object with a first end of the suction portion contracted more than a second end opposite the first end.

20. A terminal, comprising:
a display; and
a controller configured to obtain an approaching direction for a robot configured to suck and hold a target object to approach the target object in a direction different from a normal direction to a suction target surface of the target object and cause the display to display the approaching direction in a perceivable manner.
